# FASCICULE DE BREVET EUROPEEN

(11) **EP 0 742 516 B1**
(45) Date de publication et mention de la délivrance du brevet: **17.06.1998**
(21) Numéro de dépôt: 96400912.0
(22) Date de dépôt: 26.04.1996
(51) Int. Cl.: G06F 9/445, G06F 15/78, G06F 7/00

(54) **Dispositif de mise en service d'un circuit intégré**
Vorrichtung zur Inbetriebnahme einer Halbleiterschaltung
Device for putting into operation an integrated circuit

(30) Priorité: 28.04.1995 FR 9505177
(43) Date de publication de la demande: 13.11.1996
(73) Titulaire: SGS-THOMSON MICROELECTRONICS S.A., 94250 Gentilly (FR)
(72) Inventeur: Le Van Suu, Maurice, 93230 Romainville (FR)
(74) Mandataire: Schmit, Christian Norbert Marie

(56) Documents cités:
- EP-A- 0 364 743
- EP-A- 0 455 345
- DE-A- 4 225 758
- US-A- 5 361 371
- ELECTRONIC ENGINEERING, vol. 65, no. 795, 1 Mars 1993, page 83 XP000355994 "COMBINING FUZZY HARD-WARE WITH THE ARM CORE"

## Description

L'invention concerne un dispositif de mise en service d'un circuit intégré notamment un circuit intégré muni d'un processeur logique et d'un coprocesseur de logique floue. L'invention vise à permettre en fait la réalisation d'un tel circuit intégré qui comporterait, sur un seul circuit, une seule puce, à la fois le processeur et le coprocesseur de logique floue.

On connaît les circuits intégrés munis d'un processeur. Ces circuits comportent normalement des moyens d'entrée/sortie au circuit intégré, le processeur lui-même (constitué par exemple par un ensemble de portes logiques), une mémoire programme, des registres de travail, et éventuellement des mémoires de type non-volatile associés (EPROM ou bien EEPROM, ou bien EPROM FLASH). Un processeur de logique floue répond à une définition du même type et comporte les mêmes éléments.

L'intérêt des processeurs de logique floue réside dans les spécificités de cette technique. Normalement, pour pouvoir gérer un phénomène, il faut, dans un programme comportant un développement principal ainsi qu'un ensemble de sous-programmes, avoir prévu et organisé toutes les actions à entreprendre compte-tenu de la quantité des informations sur l'état du système qu'on peut recevoir. Un tel programme est généralement exigeant en termes d'octets mémoires à stocker dans la mémoire programme du circuit intégré. Par exemple, pour gérer un système de hotte aspirante avec trois entrées et une sortie, pour un processeur logique classique, il est nécessaire de disposer de douze kilos octets en mémoire programme pour stocker le programme correspondant. On peut montrer qu'en logique floue cette gestion, avec une approche suffisamment fine, peut ne nécessiter que l'enregistrement de trente-deux règles qui occuperont en mémoire programme du processeur flou moins de 500 octets. En conséquence, la combinaison d'un processeur logique et d'un processeur de logique floue sur un même circuit intégré est tout à fait intéressante car elle permet, sans nécessiter de grosse mémoire supplémentaire, d'intégrer une fonction (celle de la logique floue) particulièrement efficace.

Cependant, cette association se révèle dans les faits impraticable. En effet, il y a un problème de cohabitation entre la mémoire programme du processeur logique et la mémoire programme du processeur de logique floue. En effet, sur un circuit du type vendu aux professionnels, on est obligé de prévoir une mémoire programme du processeur de logique floue qui pourrait comporter un nombre important de règles, pour gérer un phénomène complexe, compte-tenu de ce qu'on ne sait pas a priori ce que l'utilisateur va en faire. En conséquence, on est quand même obligé dans ce cas de prévoir pour le processeur de logique floue une mémoire importante. La même situation prévaut en ce qui concerne la mémoire du processeur normal : elle aussi doit être importante.

On est alors confronté à l'obligation de réaliser un circuit intégré avec deux plans mémoire importants. C'est infaisable à bas coût. La solution consistant à réaliser une mémoire unique et à partager cette mémoire entre les besoins du processeur logique et ceux du processeur de logique floue n'est pas non plus vraiment utilisable car les bus d'adresses, les bus de données et les bus de commandes des deux processeurs ne sont pas structurés de la même façon. En effet, un circuit intégré comportant un processeur est représenté pour sa fabrication par des plans et des masques dont la définition est liée par ailleurs au protocole de fonctionnement de ce processeur logique. Il en est de même d'un processeur de logique floue. Partant de conceptions différentes, ces plans et masques ne sont pas véritablement associables. Pourtant c'est ce qu'on veut faire pour éviter d'avoir à réétudier entièrement un processeur muni d'un co-processeur de logique floue. Dans le document EP-A-0 455 345, il est par ailleurs prévu de transférer des données d'une mémoire à une autre.

Dans l'invention, on tourne la difficulté en stockant les programmes du processeur logique et du processeur de logique floue dans une seule mémoire programme, et en provoquant le chargement d'une mémoire à accès aléatoire volatile du processeur de logique floue (RAM) par le programme de ce processeur logique au moment du démarrage du circuit intégré. Autrement dit dans l'invention, on résout un problème de place sur le circuit intégré par une mise en service différée dans le temps de chacun des composants de ce circuit intégré.

Compte tenu de ce que le démarrage ne se produit pas souvent, une fois par jour pour une installation de chauffage, une fois toutes les heures pour une hotte aspirante, et compte tenu de la rapidité avec laquelle l'initialisation se produira (en un temps inférieur ou égal à la seconde), on obtient facilement le but recherché qui est de marier sur un même circuit intégré monolithique deux types de circuit différents.

L'invention a donc pour objet un dispositif de mise en service d'un circuit intégré qui comporte une mémoire programme, un premier processeur logique et un coprocesseur, notamment un coprocesseur de logique floue, caractérisé en ce qu'il comporte une mémoire à accès aléatoire, volatile, en relation avec ce coprocesseur pour mémoriser des instructions de ce coprocesseur, un circuit de chargement de cette mémoire à accès aléatoire, ce circuit de chargement comportant des moyens pour provoquer ce chargement à chaque démarrage du circuit intégré.

L'invention sera mieux comprise à la lecture de la description qui suit et à l'examen des figures qui l'accompagnent. Celles-ci ne sont données qu'à titre indicatif et nullement limitatif de l'invention. Les figures montrent
- figure 1 : une représentation schématique d'un système de l'état de la technique dans lequel le processeur logique et le processeur de logique floue sont réalisés sur des circuits intégrés différents ;
- figure 2 : les mêmes éléments que ceux de la figure 1 mais modifiés selon l'invention pour permettre la réalisation d'un seul circuit intégré ;
- figure 3 : un exemple de réalisation d'un détail du dispositif de mise en service de l'invention.

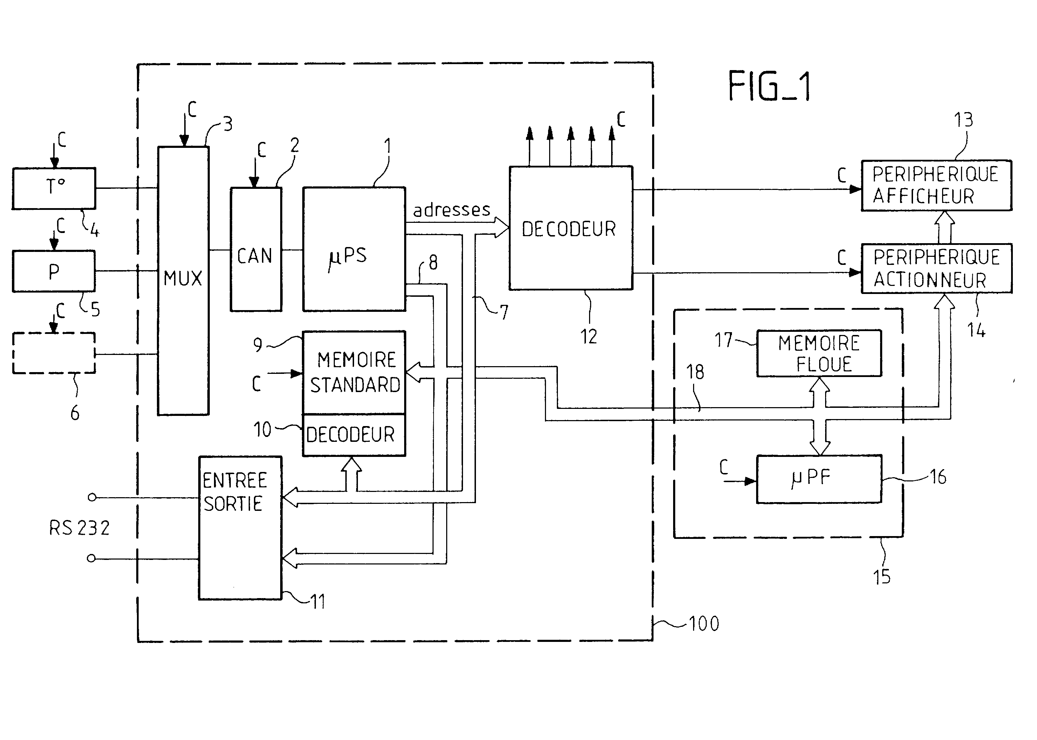

La figure 1 montre, selon l'état de la technique, un premier circuit intégré 100 avec un processeur logique standard 1 en relation, par l'intermédiaire d'un convertisseur analogique numérique 2 et d'un multiplexeur 3, avec un ensemble de capteurs 4 à 6 mesurant par exemple la température T° ou la pression P. Le processeur 1 comporte un bus d'adresses 7 et un bus de données 8 par lequel il peut accéder à une mémoire 9, comportant notamment le programme du processeur logique, par l'intermédiaire d'un décodeur 10. Il peut également accéder à un circuit d'entrée/sortie 11 permettant des échanges de signaux, notamment selon un protocole de type série dit RS232, avec le monde extérieur. Le même circuit intégré comporte encore un décodeur 12 produisant des signaux de commande C. Les signaux de commande sont appliqués au divers organes du circuit intégré ainsi que, le cas échéant, au capteurs 4 à 6 ou à d'autres circuits.

Le circuit intégré 100 décrit est en relation avec des périphériques notamment un circuit périphérique d'affichage 13 et un circuit périphérique d'action 14. Le processeur 1 est chargé de la gestion courante du système. Par exemple, il provoque la scrutation régulière des capteurs et l'envoi régulier des informations à l'afficheur ou à l'actionneur.

Les informations délivrées par les capteurs doivent être traitées rapidement. Dans la technique actuelle, on a tendance de plus en plus à utiliser des processeurs de logique floue comme indiqué sur un deuxième circuit intégré 15 en relation avec le premier. Ce deuxième circuit intégré 15 est dans ce cas un coprocesseur de logique floue comportant le processeur 16 lui-même en tant qu'unité arithmétique et logique et une mémoire programme 17. Il pourrait également être un coprocesseur d'un autre type. Le circuit 15 comporte essentiellement une liaison servant de bus de données 18 entre sa mémoire 17 et son circuit de traitement 16. La liaison 18 est naturellement reliée avec le bus de données 8.

Le fonctionnement d'un tel système de l'état de la technique comporte, à l'initiative du processeur 1, la scrutation des capteurs 4 à 5, le transport par le bus 8 à destination du coprocesseur 16 des données de mesure prélevées dans ces capteurs, le traitement dans le circuit 16 de ces information et leur restitution sur le bus 18 sous forme de données transmises par ailleurs à l'afficheur 13 ou à l'actionneur 14. Le processeur 16 comporte également une entrée de commande pour pouvoir être mis en service à l'initiative du processeur 1 par des commandes provenant du décodeur 12.

Le problème résolu par l'invention est celui de la cohabitation sur un même circuit intégré de mémoires 9 et 17 dont la gestion est différente. En effet, si on veut que ces deux mémoires soient puissantes, on obtient un circuit intégré trop gros. Si on veut mettre leur contenu dans une seule mémoire physique, il faut laisser par ailleurs au concepteur le soin de gérer l'espace mémoire. C'est alors trop compliqué pour lui. Si dans l'espace mémoire commun on fixe une limite, on obtient un système trop rigide et qui peut ne pas convenir à toutes les utilisations possibles.

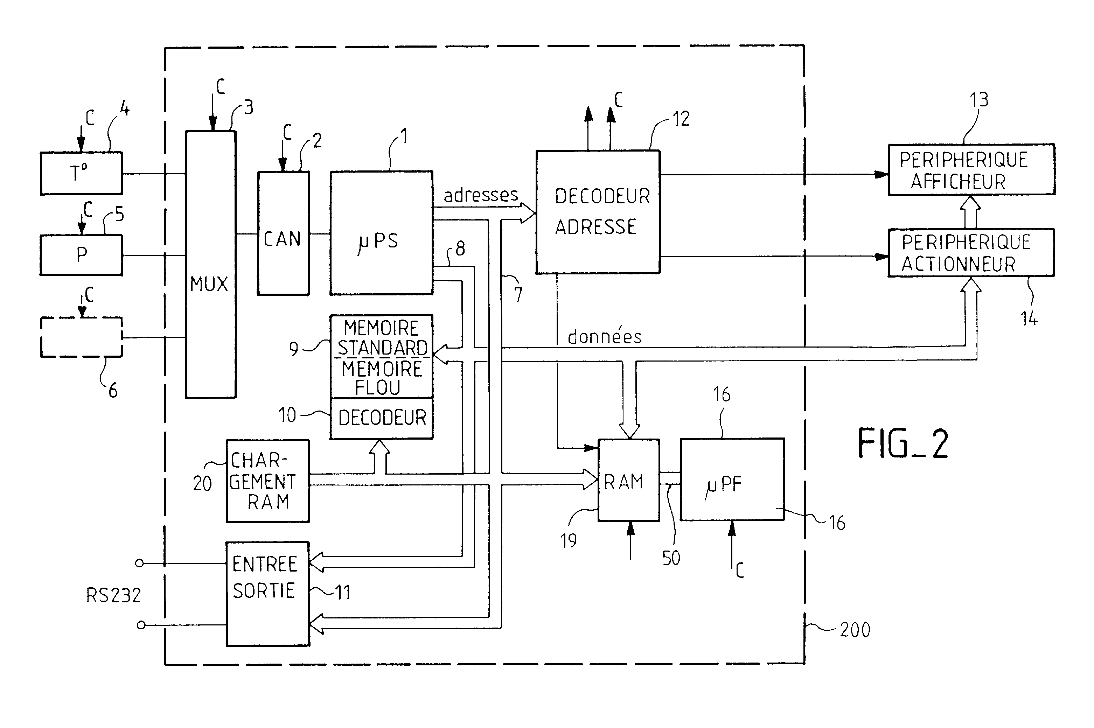

La figure 2 reprend les mêmes éléments que ceux de la figure 1 mais incorpore en plus les particularités de l'invention. Le circuit intégré concerné 200 comporte un processeur logique 1 et un coprocesseur de logique floue 16. Il comporte également un mémoire programme 9. Ce qui caractérise l'invention est que le coprocesseur, ici de logique floue, comporte maintenant une mémoire à accès aléatoire volatile 19 en lieu et place de la mémoire floue 17 qui était naturellement une mémoire non-volatile pour pouvoir contenir les instructions à exécuter. La mémoire 19 est en relation avec le coprocesseur 16 par un ensemble de connexions 50. Elle contient les règles, les instructions, de ce coprocesseur. L'invention est également caractérisée en ce qu'elle comporte un circuit de chargement 20 qui permet le chargement, au moment du démarrage du circuit 200, de la mémoire 19. Dans un exemple préféré de réalisation, qui sera décrit par la suite, au moment du démarrage, le chargement est effectué à partir du contenu de la mémoire 9. Cependant, on pourrait également envisager de prévoir le chargement de la mémoire 19 à partir du circuit d'entrée/sortie 11 avec des informations provenant du monde extérieur auquel le circuit de la figure 2 serait relié par son circuit 11, notamment selon un protocole de type RS232. Ceci fait par ailleurs l'objet d'une autre demande de brevet déposée le même jour par le même demandeur.

Le principe est le suivant. Au moment du démarrage, le processeur 1 qui comporte normalement un circuit de mise en service au démarrage (POR : power on reset en langage anglo-saxon) ne se met en service que lorsque tous ses éléments sont électriquement correctement configurés. Dans l'invention, on a prévu que, au cours de l'étape d'initialisation du circuit intégré, le circuit de chargement 20 provoquerait le chargement dans la mémoire 19 des instructions du coprocesseur 16.

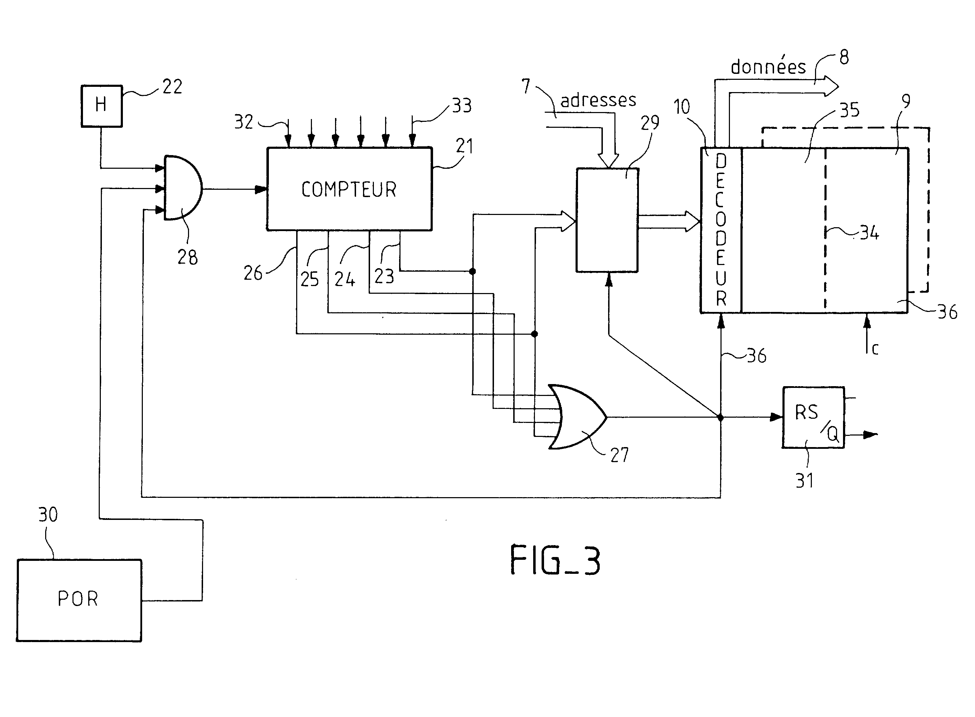

La figure 3 montre un exemple de la manière dont cela peut se produire. Le circuit 20 comporte un compteur 21 recevant un signal d'horloge d'une horloge 22 qui peut par ailleurs être l'horloge du processeur 1 ou même une horloge extérieure. Le compteur 21 est mis, au moment du démarrage, dans un état donné. Sur ses sorties, par exemple 23 à 26, il délivre alors un état électrique représentatif de son état de comptage initial. Cet état de comptage est utilisé comme une adresse. Les sorties 23 à 26 sont dans ce but raccordées au décodeur 10 de la mémoire 9 et permettent d'adresser des mots mémoires de cette mémoire 9. A chaque cycle de l'horloge 22, la mémoire 9 reçoit de plus du décodeur 12 un ordre C de lecture de son contenu situé à l'adresse représentée par les signaux disponibles sur les fils 23 à 26. Le contenu de la mémoire ainsi lu est transmis sur les fils du bus de données 8. On verra par la suite comment les données ainsi extraites de la mémoire 9 sont enregistrées dans la mémoire 19.

Au cycle suivant, le compteur qui reçoit le signal d'horloge sur son entrée de comptage, modifie son état de comptage: indique une autre adresse. Ainsi de suite, chacun des mots de la mémoire 9 adressé est envoyé sur le bus 8. On considérera pour la simplification de l'explication que le compteur 21 est un compteur décompteur.

Les fils 23 à 26 du compteur sont également reliés aux entrées d'une porte logique OU 27. La porte OU 27 délivre un signal à 1 de sortie tant qu'au moins un des signaux sur l'un quelconque des fils 23 à 26 est à l'état 1. Lorsque le compteur arrive à l'état 000...00, la porte 27 délivre un état 0.

On utilise alors cet état 0 pour plusieurs utilisations. D'une part on utilise pour arrêter le comptage dans le compteur 21. Dans ce but, la sortie de la porte 27 est reliée à une entrée d'une porte ET 28 qui reçoit par ailleurs le signal de l'horloge 22. De cette façon la porte ET 28, dont la sortie est reliée à l'entrée de comptage du compteur 21, ne permet au compteur 21 de compter les impulsions de l'horloge 22 que tant que la sortie de la porte 27 n'est pas à 0. Dès qu'elle est à 0, le décomptage s'arrête. La sortie de la porte 27 est également reliée comme entrée de commande d'un multiplexeur 29 qui organise, à l'entrée du décodeur 10, le multiplexage des fils 23 à 26 avec les fils d'adresse du bus 7 en provenance du processeur 1. Au départ, lorsque la sortie de la porte 27 est à 1, les états électriques disponibles aux sorties 23 à 26 sont appliqués au décodeur 10. Les états du bus d'adresse 7 ne sont pas pris en compte. Lorsque la lecture initiale de la mémoire 9 est terminée, le compteur 21 est arrêté et le multiplexeur 29 basculé par la sortie de la porte 27 permet normalement l'adressage de la mémoire 9 par le bus d'adresse 7.

Pour le chargement de la mémoire RAM 19, le processeur 1 délivre une série d'adresses qui sont appliquées naturellement aux entrées d'adresses de la mémoire 19 par le bus 7. Cette série d'adresses est par exemple produite par un autre compteur, du même type que le compteur 21, contenu dans le processeur 1, et relié en sortie aux fils du bus 7. Pendant ce temps, les données sont elles disponibles sur le bus 8 comme cela a été vu précédemment. Le processeur 1 délivre également pendant cette période initiale avec le décodeur 12 un ordre d'écriture dans la mémoire 19 des données disponibles sur le bus 8 aux adresses imposées par le bus 7.

A l'issue de la période initiale la mémoire 19 est chargée avec les instructions, les règles, utilisables par le processeur flou 16. C'est exactement ce qu'on voulait.

La figure 3 montre également un circuit de mise en service du type POR de l'état de la technique. Dans l'invention, la sortie du circuit POR va également être introduite à une entrée supplémentaire de la porte ET 28 de manière à n'autoriser le démarrage du circuit de chargement de la mémoire 19 que lorsque le circuit intégré sera en ordre de marche. La figure 3 montre également une bascule RS 31 qui reçoit le signal introduit par la porte OU 27 et qui délivre sur sa sortie /Q un signal pouvant servir de fin définitive d'initialisation du circuit intégré de la figure 2.

Le compteur 21 comporte, dans un exemple préféré, des entrées de forçage 32 à 33 sur lesquelles, avant que le signal délivré par le circuit 30 ne devienne actif, le processeur 1 vient placer des états électriques permettant de mettre le compteur 21 dans un état de décomptage choisi. On sait en effet d'une manière classique imposer l'état de certains compteurs de façon à se retrouver dans un état choisi. Cette solution préférée a pour avantage de permettre au concepteur de choisir lui-même, dans la mémoire 9, la limite 34 qui sépare les zones 35 et 36 de cette mémoire où on stocke respectivement les instructions du processeur flou (à charger au moment du démarrage) et les instructions du processeur 1. Dans ce but, la mémoire 9 sera de préférence une mémoire de type EEPROM : programmable et effaçable. La partie 35 s'entend comme une partie comportant les zones mémoires contiguës, contigües au sens de l'adressage successif par les signaux disponibles sur les sorties 23 à 26 du compteur 21.

De manière à ne plus pouvoir accéder à la mémoire à accès aléatoire 19 après la période initiale, on peut prévoir que le bus 7 ne permet d'accéder à cette mémoire 19 qu'au travers d'un multiplexeur du même type que le multiplexeur 29, commandé par ailleurs par le signal émanant de la porte 27. Par exemple après le démarrage le bus 7 ne serait plus en relation avec la mémoire 19. Celle-ci serait uniquement en relation avec le processeur 16 par le bus 50.

On peut également prévoir une autre architecture de la mémoire 9. Celle-ci dans un exemple comporte un seul décodeur (qui prend normalement beaucoup de place) et deux pages mémoires. Une première page mémoire de la mémoire 9 est mise en service tant qu'elle reçoit le signal délivré par la porte 27 à l'état actif. L'autre page mémoire est mise en service lorsqu'elle reçoit ce même signal à l'état inactif. Ceci est schématiquement représenté sur la figure 3 où la sortie de la porte 27 vient, dans le décodeur 10, comme une entrée 36 de décodage complémentaire permettre de distinguer d'une mémoire à l'autre. Dans cette solution on gagne, par rapport à la solution présentée sur la figure 1, en ce sens qu'il n'y a qu'un seul décodeur 10 pour deux pages mémoires. La deuxième page mémoire est montrée en pointillée derrière la page mémoire 9.

## Revendications

1. Dispositif de mise en service d'un circuit intégré qui comporte une mémoire programme (19), un processeur (1) logique et un coprocesseur (16), notamment un coprocesseur de logique floue, caractérisé en ce qu'il comporte une mémoire (19) à accès aléatoire, volatile, en relation avec ce coprocesseur pour mémoriser des instructions de ce coprocesseur, un circuit (20) de chargement de cette mémoire à accès aléatoire, ce circuit de chargement et le programme du processeur logique comportant des moyens (27) pour provoquer ce chargement à chaque démarrage du circuit intégré.

2. Dispositif selon la revendication 1, caractérisé en ce que le circuit de chargement comporte un compteur décompteur piloté par une horloge (22) pour produire les adresses, dans la mémoire (1) programme du circuit intégré, des mots mémoires de cette mémoire programme à charger dans la mémoire (19) à accès aléatoire du coprocesseur.

3. Dispositif selon la revendication 2, caractérisé en ce que le compteur décompteur comporte des moyens (32,33) pour être configuré avec une valeur initiale, au moment de la mise en service du circuit intégré, avant d'effectuer son décomptage.

4. Dispositif selon l'une des revendications 1 à 3, caractérisé en ce que la mémoire programme comporte au moins une partie dupliquée et, dans son décodeur, un accès supplémentaire (36) de décodage pour décoder un signal produit par le compteur afin d'accéder à cette partie dupliquée de cette mémoire programme.

5. Dispositif selon l'une des revendications 1 à 4, caractérisé en ce qu'il comporte un bus d'adresse (7) pour relier la mémoire programme (9) au processeur (1) logique, le circuit de chargement (20) comportant une première entrée d'un multiplexeur (21) connectée à ce bus d'adresse, une deuxième entrée recevant des signaux d'adressage produit dans ce circuit de chargement.

## Patentansprüche

1. Vorrichtung zur Inbetriebnahme eines integrierten Schaltkreises, die einen Programmspeicher (19), einen logischen Prozessor (1) und einen Coprozessor (16), insbesondere einen Coprozessor mit unscharfer Logik aufweist, dadurch gekennzeichnet, daß sie einen flüchtigen Direktzugriffsspeicher (19) in Verbindung mit dem Coprozessor aufweist, um Befehle des Coprozessors zu speichern, einen Aufladungsschaltkreis (20) des Direktzugriffsspeichers, wobei der Aufladeschaltkreis und das Programm des logischen Prozessors Mittel (27) aufweisen, die das Aufladen bei jedem Einschalten des Schaltkreises einleiten.

2. Vorrichtung nach Anspruch 1, dadurch gekennzeichnet, daß der Aufladeschaltkreis einen zwischenzählenden Zähler aufweist, der durch einen Taktgeber gesteuert wird, um Adressen im Speicherprogramm (1) des integrierten Schaltkreises zu erzeugen, wobei Speicherwörter dieses Speicherprogramms im Direktzugriffsspeicher des Coprozessors zu laden sind.

3. Vorrichtung nach Anspruch 2, dadurch gekennzeichnet, daß der zwischenzählende Zähler Vorrichtungen (32, 33) aufweist, um mit einem Initialisierungswert im Augenblick der Inbetriebnahme des integrierten Speichers vor der Zwischenzählung konfiguriert zu werden.

4. Vorrichtung nach einem der Ansprüche 1 bis 3, dadurch gekennzeichnet, daß das Speicherprogramm wenigstens einen duplizierten Anteil aufweist und in seinem Dekoder einen zusätzlichen Dekoderzugriff (36) aufweist, um ein durch den Zähler erzeugtes Signal zu dekodieren, um auf den duplizierten Anteil des Programmspeichers zuzugreifen.

5. Vorrichtung nach einem der Ansprüche 1 bis 4, dadurch gekennzeichnet, daß sie einen Adressenbus (7) aufweist, um den Programmspeicher (9) mit dem logischen Prozessor (1) zu verbinden, wobei der Aufladungsschaltkreis (20) einen ersten Eingang eines Multiplexers (21) aufweist, der mit diesem Adressenbus verbunden ist, einen zweiten Eingang, der Adressensignale im Aufladungsschaltkreis erzeugt.

## Claims

1. Device for bringing into service an integrated circuit, which includes a program memory (19), a logic processor (1) and a coprocessor (16), notably a fuzzy logic coprocessor, characterised that it has a volatile random access memory (19) connected with this coprocessor in order to store instructions from this coprocessor, a circuit (20) for loading this random access memory, this loading circuit and the program of the logic processor having means (27) for bringing about this loading each time the integrated circuit is started up.

2. Device according to Claim 1, characterised in that the loading circuit has a counter/down-counter controlled by a clock (22) for producing the addresses, in the program memory (1) of the integrated circuit, of the memory words of this program memory to be loaded in the random access memory (19) of the coprocessor.

3. Device according to Claim 2, characterised in that the counter/down-counter has means (32, 33) for being configured with an initial value, at the time the integrated circuit is brought into service, before effecting its down-counting.

4. Device according to one of Claims 1 to 3, characterised in that the program memory has at least one duplicated part and, in its decoder, a supplementary decoding access (36) for decoding a signal produced by the counter in order to gain access to this duplicated part of this program memory.

5. Device according to one of Claims 1 to 4, characterised in that it has an address bus (7) for connecting the program memory (9) to the logic processor (1), the loading circuit (20) having a first input of a multiplexer (21) connected to this address bus, a second input receiving addressing signals produced in this loading circuit.
